# EUROPÄISCHE PATENTSCHRIFT

(11) **EP 3 086 994 B1**
(45) Veröffentlichungstag und Bekanntmachung des Hinweises auf die Patenterteilung: **28.03.2018**
(21) Anmeldenummer: 14828142.1
(22) Anmeldetag: 16.12.2014
(51) Int. Cl.: B62D 15/02, B60W 10/18, B60W 10/20, B60W 30/06, B60W 40/02

(54) **PARK-ASSISTENZSYSTEM UND VERFAHREN ZUM EINPARKEN EINES FAHRZEUGES IN EINE PARKGARAGE**
PARKING ASSISTANCE SYSTEM AND METHOD FOR PARKING A VEHICLE IN A PARKING GARAGE
SYSTÈME D'AIDE AU STATIONNEMENT ET PROCÉDÉ POUR GARER UN VÉHICULE DANS UN GARAGE

(30) Priorität: 23.12.2013 DE 202013011576 U; 23.12.2013 DE 202013011575 U
(43) Veröffentlichungstag der Anmeldung: 02.11.2016
(73) Patentinhaber: ADC Automotive Distance Control Systems GmbH, 88131 Lindau (DE)
(72) Erfinder: HOLLAND-LETZ, Günter, 33106 Paderborn (DE)
(74) Vertreter: Bobbert, Christiana
(86) Internationale Anmeldenummer: PCT/DE2014/200718
(87) Internationale Veröffentlichungsnummer: WO 2015/096838

(56) Entgegenhaltungen:
- EP-A2- 1 512 611
- EP-A2- 2 008 915
- WO-A1-2014/076071
- DE-A1-102009 057 837
- DE-A1-102011 107 974
- US-A1- 2013 085 637

## Beschreibung

Die Erfindung betrifft ein Park-Assistenzsystem und ein Verfahren zum automatischen Einparken eines Fahrzeuges in eine Parkgarage.

Das Einparken eines Fahrzeuges, insbesondere eines Straßenfahrzeuges, beispielsweise eines Pkws oder eines Lastwagens, in eine Parkgarage, stellt in vielen Fällen aufgrund der relativ geringen Größe der Parkgarage ein anspruchsvolles Fahrmanöver für den Fahrer des Fahrzeuges dar. Insbesondere die relativ geringe Breite von Standardgaragen erfordert es, ein Fahrzeug relativ nah an der Garagenwand einer Parkgarage zu parken. Dieses nahe Parken ist auch deshalb erforderlich, weil die Abmessungen der Fahrzeugkarosserien durchschnittlicher Fahrzeuge zugenommen haben und oft vorhandener Stellplatz in einer Parkgarage für andere Gegenstände, beispielsweise für Fahrräder oder Gartengeräte, verwendet wird. Hierdurch wird jedoch der zum Ein- und Aussteigen zur Verfügung stehende Platz reduziert und es besteht die Gefahr, dass die Fahrzeugkarosserie des Fahrzeuges während des Einpark-Fahrmanövers oder beim Öffnen von Fahrzeugtüren eine Garagenwand der Parkgarage berührt, wobei es zu Lackschäden an der Fahrzeugkarosserie des Fahrzeuges kommen kann. Vor allem bei einem Rückwärtseinparken des Fahrzeuges in eine Parkgarage besteht für den Fahrer des Fahrzeuges eine besondere Schwierigkeit, den notwendigen Abstand zu den Garagenwänden einzuhalten, da der Fahrer nur eine beschränkte Sicht auf die Garageneinfahrt der Parkgarage hat.

Die US 2013/0085637 A1 beschreibt beispielsweise ein Fahrerassistenzsystem, welches einem Fahrer eines Fahrzeugs beim Einparken in eine Parkgarage assistiert. Das Verfahren ist in zwei verschiedene Phasen eingeteilt: einer ersten Phase und einer zweiten Phase. Die erste Phase dient dem lernen und Speichern einer möglichen Einparkroute. In der zweiten Phase ist das Fahrzeug dann in der Lage, die eingespeicherte Route selbständig abzufahren.

Herkömmliche Fahrzeuge verfügen zunehmend über Messsensorik, insbesondere Ultraschallsenoren, zur Abstandsmessung. Bei einem Unterschreiten eines gewissen Abstandes erhält der Fahrer eine akustische Warnung und ggf. eine optische Anzeige des Ultraschallmessfeldes in einer Anzeigeeinheit einer Fahrernutzerschnittstelle. Eine derartige herkömmliche optische oder akustische Anzeige ermöglicht jedoch in einem engen bzw. geringen Abstandsbereich von weniger als 10 cm kein exaktes und sicheres Positionieren des Fahrzeuges innerhalb einer Parkgarage.

Es ist daher eine Aufgabe der vorliegenden Erfindung, eine Vorrichtung und ein Verfahren zu schaffen, welches ein sicheres Einparken eines Fahrzeuges in eine Parkgarage gewährleistet.

Diese Aufgabe wird erfindungsgemäß durch ein Park-Assistenzsystem mit den in Patentanspruch 1 angegebenen Merkmalen gelöst.

Die Erfindung schafft demnach gemäß einem ersten Aspekt ein Park-Assistenzsystem zum Einparken eines Fahrzeuges in eine Parkgarage mit
einer an mindestens einem Fahrzeugende des Fahrzeuges angeordneten Messsensorik zur Messung einer Garagenkontur der Parkgarage und mit
einer Lenk-Steuereinheit, die das Fahrzeug ausgehend von einem Haltepunkt in eine Parkendstellung innerhalb der Parkgarage automatisch lenkt.

Durch das erfindungsgemäße Park-Assistenzsystem wird die Berührung einer Garagenwand der Parkgarage bzw. eine Kollision mit einer Garagenwand sicher vermieden. Darüber hinaus erfolge die Lenkung des Fahrzeuges ausgehend von dem Haltepunkt automatisch ohne Eingriff des Fahrers. Hierdurch wird das Parkmanöver für den Fahrer des Fahrzeuges vereinfacht.

Bei einer möglichen Ausführungsform des erfindungsgemäßen Park-Assistenzsystems vermisst die Messsensorik des Park-Assistenzsystems die Garagenkontur bis zum Erreichen des in einem Einfahrtsbereich der Parkgarage befindlichen Haltepunktes.

Bei dem erfindungsgemäßen Park-Assistenzsystem ermittelt eine Berechnungseinheit des Park-Assistenzsystems anhand der vermessenen Garagenkontur der Parkgarage eine Stellung des Fahrzeuges, insbesondere eine Winkelstellung des Fahrzeuges, an dem Haltepunkt relativ zu der Parkgarage.

Ferner berechnet bei dem erfindungsgemäßen Park-Assistenzsystem die Berechnungseinheit des Park-Assistenzsystems auf Basis der ermittelten Stellung des Fahrzeuges an dem Haltepunkt relativ zu der Parkgarage Fahrspurlinien ausgehend von dem Haltepunkt hin zu einer geeigneten Parkendstellung innerhalb der Parkgarage, in welcher die Fahrzeugkarosserie des Fahrzeuges vorzugsweise weitgehend parallel zu mindestens einer Garagenwand der Parkgarage ausgerichtet ist.

Bei einer weiteren möglichen Ausführungsform des erfindungsgemäßen Park-Assistenzsystems lenkt die Lenk-Steuereinheit des Park-Assistenzsystems das Fahrzeug ausgehend von dem Haltepunkt entsprechend einer berechneten Fahrspurlinie in die Parkendstellung innerhalb der Parkgarage automatisch.

Bei einer weiteren möglichen Ausführungsform des erfindungsgemäßen Park-Assistenzsystems werden die durch die Berechnungseinheit des Park-Assistenzsystems berechneten Fahrspurlinien dem Fahrer des Fahrzeuges auf einer Anzeige einer Nutzerschnittstelle des Park-Assistenzsystems angezeigt, wobei eine der angezeigten Fahrspurlinien durch den Fahrer mittels der Nutzerschnittstelle auswählbar ist, wobei die Lenk-Steuereinheit des Park-Assistenzsystems das Fahrzeug ausgehend von dem Haltepunkt entsprechend der durch den Fahrer ausgewählten Fahrspurlinie in die Parkendstellung innerhalb der Parkgarage automatisch lenkt.

Bei einer weiteren möglichen Ausführungsform des erfindungsgemäßen Park-Assistenzsystems berechnet die Berechnungseinheit des Park-Assistenzsystems mögliche Fahrspurlinien in Abhängigkeit von einem gemessenen Abstand zwischen dem Haltepunkt und der Garageneinfahrt der Parkgarage.

Bei einer weiteren möglichen Ausführungsform des erfindungsgemäßen Park-Assistenzsystems berechnet die Berechnungseinheit des Park-Assistenzsystems mögliche Fahrspurlinien in Abhängigkeit einer gespeicherten Fahrzeuglänge des Fahrzeuges und/oder einer gespeicherten Fahrzeugbreite des Fahrzeuges.

Bei einer weiteren möglichen Ausführungsform des erfindungsgemäßen Park-Assistenzsystems berechnet die Berechnungseinheit mögliche Fahrspurlinien in Abhängigkeit der vermessenen Garagenkontur der Parkgarage.

Bei einer weiteren möglichen Ausführungsform des erfindungsgemäßen Park-Assistenzsystems ist der in dem Einfahrtsbereich der Parkgarage gelegene Haltepunkt markiert.

Bei einer weiteren möglichen Ausführungsform des erfindungsgemäßen Park-Assistenzsystems ist der in dem Einfahrtsbereich der Parkgarage befindliche Haltepunkt sensorisch durch einen Sensor des Park-Assistenzsystems erfassbar.

Bei einer weiteren möglichen Ausführungsform des erfindungsgemäßen Park-Assistenzsystems wird ein Erreichen des Haltepunktes dem Fahrer des Fahrzeuges akustisch oder optisch über eine Nutzerschnittstelle des Park-Assistenzsystems angezeigt bzw. gemeldet.

Bei einer weiteren möglichen Ausführungsform des erfindungsgemäßen Park-Assistenzsystems wird die durch die Lenk-Steuereinheit zum Lenken des Fahrzeuges in die Parkendstellung genutzte Fahrspurlinie in einer Datenspeichereinheit des Park-Assistenzsystems gespeichert.

Bei einer weiteren möglichen Ausführungsform des erfindungsgemäßen Park-Assistenzsystems wird die gespeicherte genutzte Fahrspurlinie durch die Lenk-Steuereinheit aus der Datenspeichereinheit des Park-Assistenzsystems ausgelesen und das Fahrzeug anschließend ausgehend von der Parkendstellung aus der Parkgarage heraus entsprechend der ausgelesenen Fahrspurlinie automatisch gelenkt.

Bei einer weiteren möglichen Ausführungsform des erfindungsgemäßen Park-Assistenzsystems wird, falls die Berechnungseinheit des Park-Assistenzsystems ausgehend von der ermittelten Stellung des Fahrzeuges an dem Haltepunkt keine mögliche Fahrspurlinie zu einer geeigneten Parkendstellung innerhalb der Parkgarage berechnen kann, der Fahrer des Fahrzeuges über eine notwendige Änderung der Stellung des Fahrzeuges relativ zu der Parkgarage informiert.

Bei einer weiteren möglichen Ausführungsform des erfindungsgemäßen Park-Assistenzsystems weist die Messsensorik des Park-Assistenzsystems eine Ultraschallsensorik auf.

Bei einer weiteren möglichen Ausführungsform des erfindungsgemäßen Park-Assistenzsystems weist die Messsensorik des Park-Assistenzsystems eine Lasersensorik auf.

Bei einer weiteren möglichen Ausführungsform des erfindungsgemäßen Park-Assistenzsystems ist die Messsensorik des Park-Assistenzsystems auf einer Beifahrerseite an einem hinteren Fahrzeugende des Fahrzeuges angeordnet und quer zu der Fahrtrichtung des Fahrzeuges ausgerichtet.

Bei einer weiteren möglichen Ausführungsform des erfindungsgemäßen Park-Assistenzsystems erfasst die Messsensorik des Park-Assistenzsystems laufend bzw. kontinuierlich einen Abstand des Fahrzeuges zu einer Garagenwand der Parkgarage während des Einparkens in die Parkgarage.

Bei einer weiteren möglichen Ausführungsform des erfindungsgemäßen Park-Assistenzsystems aktiviert eine Brems-Steuereinheit des Park-Assistenzsystems bei Unterschreiten eines vorgegebenen Sicherheitsabstandes zwischen dem Fahrzeug und einer Garagenwand der Parkgarage automatisch ein Radbremssystem des Fahrzeuges.

Bei einer weiteren möglichen Ausführungsform des erfindungsgemäßen Park-Assistenzsystems berechnet die Berechnungseinheit des Park-Assistenzsystems basierend auf dem sensorisch erfassten Abstand des Fahrzeuges zu der Garagenwand der Parkgarage und basierend auf einer Fahrzeuggeschwindigkeit des Fahrzeuges eine notwendige Bremsverzögerungszeit und/oder Bremsverzögerungskraft zur Einhaltung des Sicherheitsabstandes.

Bei einer weiteren möglichen Ausführungsform des erfindungsgemäßen Park-Assistenzsystems steuert die Brems-Steuereinheit des Park-Assistenzsystems das Radbremssystem des Fahrzeuges in Abhängigkeit von der berechneten Bremsverzögerungszeit und/oder Bremsverzögerungskraft an.

Die Erfindung schafft ferner gemäß einem weiteren Aspekt ein Garagen-Park-Assistenzsystem, welches das Fahrzeug ab einem Haltepunkt selbstlenkend in eine Parkposition parallel an einer Garagenwand steuert, wobei das Garagen-Park-Assistenzsystem dadurch gekennzeichnet ist, dass auf der Beifahrerseite am hinteren Fahrzeugende eine quer zur Fahrtrichtung ausgerichtete Messsensorik angeordnet ist.

Die Erfindung schafft ferner gemäß einem weiteren Aspekt einen Anfahrtschutz-Mechanismus, der ein Unterschreiten von einem sicheren Wandabstand verhindert, wobei der Anfahrtschutz-Mechanismus dadurch gekennzeichnet ist, dass der von einem Sensor erfasste Wandabstand bei einem vordefinierten Minimalabstand in der Auswerteelektronik ein Stoppsignal erzeugt, das auf das vorhandene Radbremssystem wirkt, sodass das Fahrzeug im Sicherheitsabstand zum Stehen kommt.

Die Erfindung schafft ferner gemäß einem weiteren Aspekt ein Verfahren zum Einparken eines Fahrzeuges in eine Parkgarage mit den in Patentanspruch 15 angegebenen Merkmalen.

Die Erfindung schafft demnach ein Verfahren zum Einparken eines Fahrzeuges in eine Parkgarage mit den folgenden Schritten:
Messen einer Garagenkontur der Parkgarage bis zum Erreichen eines in einem Einfahrtsbereich der Parkgarage befindlichen Haltepunktes,
Ermitteln einer Stellung des Fahrzeuges an dem Haltepunkt relativ zu der Parkgarage aus der gemessenen Garagenkontur der Parkgarage,
Berechnen von mindestens einer Fahrspurlinie von dem Haltepunkt zu einer Parkendstellung innerhalb der Parkgarage auf Basis der ermittelten Stellung des Fahrzeuges und in Abhängigkeit einer sensorisch erfassten Garagentiefe der Parkgarage und einer sensorisch erfassten Garagenbreite der Parkgarage und
automatisches Lenken des Fahrzeuges ausgehend von dem Haltepunkt bis zu der Parkendstellung innerhalb der Parkgarage entsprechend der berechneten Fahrspurlinie.

Bei einer möglichen Ausführungsform des erfindungsgemäßen Verfahrens wird die Fahrspurlinie in einer Datenspeichereinheit gespeichert und das Fahrzeug ausgehend von der Parkendstellung aus der Parkgarage entsprechend der aus der Datenspeichereinheit wieder ausgelesenen Fahrspurlinie automatisch herausgelenkt.

Bei einer weiteren möglichen Ausführungsform des erfindungsgemäßen Verfahrens wird während des Lenkens des Fahrzeuges laufend ein Abstand des Fahrzeuges zu einer Garagenwand der Parkgarage sensorisch erfasst und bei Unterschreiten eines Sicherheitsabstandes zwischen dem Fahrzeug und der Garagenwand das Fahrzeug automatisch abgebremst.

Bei einer weiteren möglichen Ausführungsform des erfindungsgemäßen Verfahrens werden mögliche Fahrspurlinien in Abhängigkeit von einem gemessenen Abstand zwischen dem Haltepunkt und einer Garageneinfahrt der Parkgarage und/oder in Abhängigkeit einer gespeicherten Fahrzeuglänge des Fahrzeuges und/oder einer gespeicherten Fahrzeugbreite des Fahrzeuges und/oder in Abhängigkeit der vermessenen Garagenkontur der Parkgarage berechnet.

Bei einer möglichen Ausführungsform des erfindungsgemäßen Verfahrens sind die berechneten möglichen Fahrspurlinien Klothoidenbahnen.

Bei einer weiteren möglichen Ausführungsform des erfindungsgemäßen Verfahrens werden die Verfahrensschritte während des Einparkmanövers in Echtzeit ausgeführt.

Die Erfindung schafft gemäß einem weiteren Aspekt ein Steuerprogramm zur Steuerung eines Einparkmanövers eines Fahrzeuges mit Programmbefehlen, welche das erfindungsgemäße Verfahren ausführen.

Bei einer möglichen Ausführungsform wird dieses Einpark-Steuerprogramm durch einen Mikroprozessor in der Steuerung eines Park-Assistenzsystems ausgeführt.

Bei einer möglichen Ausführungsform wird das Steuerprogramm aus einem Programmspeicher des Park-Assistenzsystems ausgelesen.

Im Weiteren werden mögliche Ausführungsformen des erfindungsgemäßen Park-Assistenzsystems und des erfindungsgemäßen Verfahrens zum Einparken eines Fahrzeuges in eine Parkgarage unter Bezugnahme auf die beigefügten Figuren näher erläutert.

Es zeigen:
- Figur 1: ein Blockschaltbild einer möglichen Ausführungsform des erfindungsgemäßen Park-Assistenzsystems;
- Figur 2: ein Blockschaltbild zur Darstellung eines weiteren Ausführungsbeispiels eines erfindungsgemäßen ParkAssistenzsystems;
- Figur 3: ein Ablaufdiagramm zur Darstellung eines Ausführungsbeispiels des erfindungsgemäßen Verfahrens zum Einparken eines Fahrzeuges in eine Parkgarage;
- Figur 4: eine schematische Darstellung eines Einparkvorgangs zur Erläuterung der Funktionsweise des erfindungsgemäßen Park-Assistenzsystems und des erfindungsgemäßen Verfahrens.

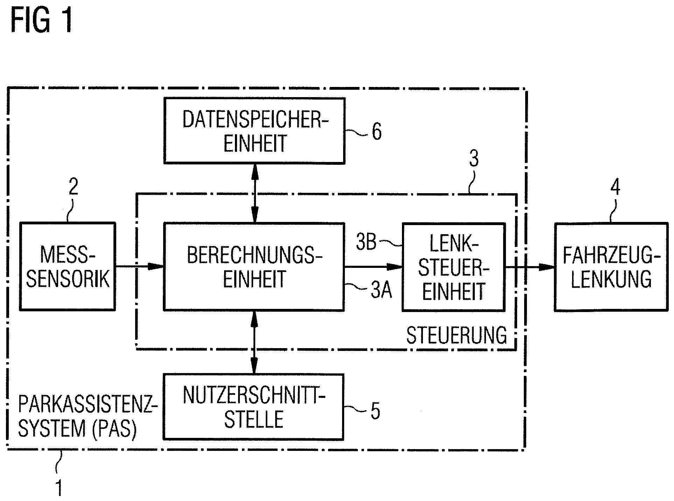

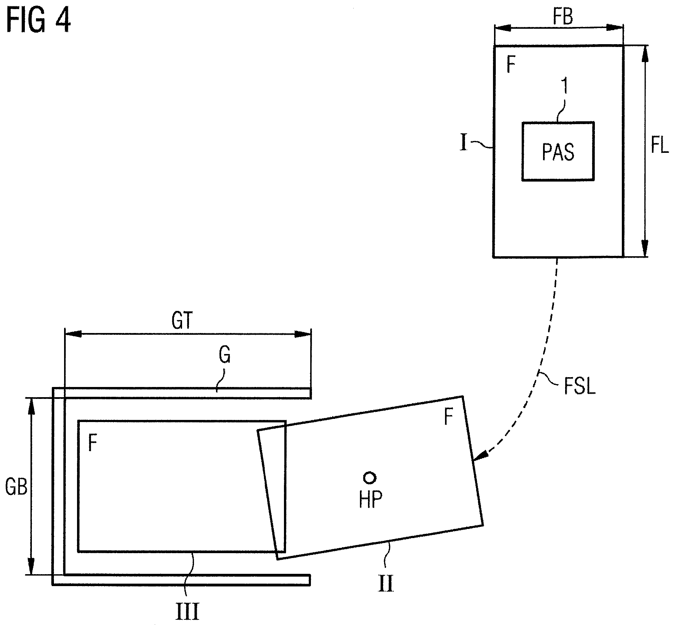

Wie man aus Figur 1 erkennen kann, weist ein erfindungsgemäßes Park-Assistenzsystem 1 bei dem dargestellten Ausführungsbeispiel eine Messsensorik 2 auf, die Messdaten oder Messsignale an eine Steuerung 3 des Park-Assistenzsystems 1 liefert. Die Messsensorik 2 ist vorzugsweise an einem Fahrzeugende des Fahrzeuges angeordnet. Bei einer möglichen Ausführungsform ist die Messsensorik zur Messung einer Garagenkontur einer Fahrzeugparkgarage ausgelegt. Die Messsensorik 2 weist bei einer möglichen Ausführungsform ein Ultraschallsystem und/oder ein Lasersystem auf. Das Ultraschallsystem weist bei einer möglichen Ausführungsform mehrere Ultraschallsensoren auf, die an der Fahrzeugkarosserie des Fahrzeuges F angebracht sind. Wie in Figur 1 dargestellt, enthält die Steuerung 3 bei dem dargestellten Ausführungsbeispiel eine Berechnungseinheit 3A und eine Lenk-Steuereinheit 3B. Die Lenk-Steuereinheit 3B lenkt bei dem erfindungsgemäßen Park-Assistenzsystem 1 ausgehend von einem Haltepunkt HP das Fahrzeug F in eine Parkendstellung innerhalb der Parkgarage G.
Die Messsensorik 2 vermisst vorzugsweise die Garagenkontur GK bis zum Erreichen des in einem Einfahrtsbereich der Parkgarage G befindlichen Haltepunktes HP. Die Messsensorik 2 misst während der Fahrt zu dem Haltepunkt HP in dem Eingangsbereich der Parkgarage G die umgebende Garagenkontur. Die Berechnungseinheit 3A der Steuerung 3 berechnet aus der gemessenen Garagenkontur der Parkgarage G eine Stellung des Fahrzeuges F an dem Haltepunkt HP relativ zu der Parkgarage G. Die Berechnungseinheit 3A berechnet aus der gemessenen Garagenkontur GK vorzugsweise die Position der Winkelstellung von dem Fahrzeug F von dem an der Garageneinfahrt befindlichen Haltepunkt. Die Berechnungseinheit 3A berechnet vorzugsweise auf Basis der ermittelten Stellung des Fahrzeuges F an dem Haltepunkt HP mögliche Fahrspurlinien FSL ausgehend von dem Haltepunkt HP hin zu einer geeigneten Parkendstellung innerhalb der Parkgarage G wie in Figur 4 schematisch dargestellt. Figur 4 zeigt ein Fahrzeug F, beispielsweise einen Personenkraftwagen oder einen Lastkraftwagen, der über ein Park-Assistenzsystem 1 gemäß der Erfindung verfügt. Der Fahrer des Fahrzeuges F lenkt zunächst manuell das Fahrzeug F, beispielsweise rückwärts, wie in Figur 4 dargestellt, zu einem vorgegebenen Haltepunkt HP. Bei einer möglichen Ausführungsform wird das Erreichen des Haltepunktes HP dem Fahrer des Fahrzeuges F akustisch und/oder optisch über eine Nutzerschnittstelle innerhalb des Fahrzeuges F angezeigt bzw. gemeldet. Figur 4 zeigt die Ausgangsstellung I des Fahrzeuges F und die Haltestellung II des Fahrzeuges F an dem Haltepunkt HP. Ausgehend von der Haltestellung II wird anschließend das Fahrzeug F durch die Lenk-Steuereinheit 3B der Steuerung 3 des Park-Assistenzsystems 1 automatisch in die Parkendstellung III gelenkt. Hierfür steuert die Lenk-Steuereinheit 3B des Park-Assistenzsystems 1, wie in Figur 1 dargestellt, eine Fahrzeuglenkung 4 innerhalb des Fahrzeuges F an. Wie bereits erwähnt, befindet sich der Haltepunkt HP in einem Einfahrtsbereich der Parkgarage G. Der Fahrer des Fahrzeuges F fährt noch selbst manuell das Fahrzeug F zu der Einfahrt der Parkgarage G, wobei das Fahrzeugende, beispielsweise das Fahrzeugheck, beim Rückwärtseinparken mit mindestens einem Sensor der Messsensorik 2 vorzugsweise die Garageneinfahrt GK der Parkgarage G, beispielsweise 0,5 bis 1 m, passiert hat. Bei der Einfahrt erfasst der Sensor der Messsensorik 2 die Position ausgehend von dem Fahrzeugende, insbesondere dem Fahrzeugheck, relativ zu der Garagenkontur GK der Garageneinfahrt G. Die Berechnungseinheit 3A der Steuerung 3 erhält die entsprechenden Sensordaten und führt vorzugsweise eine digitale Signalauswertung durch. Aus der digitalen Signalauswertung wird vorzugsweise die Distanz des Fahrzeuges F zu der Garageneinfahrt, der Abstand zu einem Vorsprung der Garageneinfahrt und basierend auf mehreren Abstandswerten eine Winkelstellung des Fahrzeuges F relativ zu mindestens einer Garagenwand der Garage G berechnet. Die Sensordaten der Messsensorik 2 werden vorzugsweise durch Ultraschallsensoren, einer Ultraschallsensorik oder durch Sensoren eines Lasersystems geliefert. Eine Lasermesssensorik bietet den Vorteil, dass genaue und einfacher auswertbare Laserwerte erzeugt werden. Die Berechnungseinheit 3A berechnet auf Basis der ermittelten Relativstellung des Fahrzeuges F zu der Garage G an dem Haltepunkt HP verschiedene mögliche Fahrspurlinien FSL, um das Fahrzeug F ausgehend von dem Haltepunkt HP zu einer geeigneten Parkendstellung innerhalb der Fahrzeuggarage G zu lenken. In der geeigneten Parkendstellung ist die Fahrzeugkarosserie des Fahrzeuges F weitestgehend parallel zu mindestens einer Garagenwand der Parkgarage G ausgerichtet, wie in Figur 4 dargestellt. Die Lenk-Steuereinheit 3B der Steuerung 3 des Park-Assistenzsystems 1 lenkt ausgehend von dem Haltepunkt HP entsprechend einer berechneten Fahrspurlinie FSL das Fahrzeug F in die Parkendstellung innerhalb der Parkgarage G. Bei einer möglichen Ausführungsform werden durch die Berechnungseinheit 3A des Park-Assistenzsystems 1 mehrere Fahrspurlinien FSL dem Fahrer des Fahrzeuges F über eine Anzeige einer Nutzerschnittstelle 5 angezeigt. Der Fahrer des Fahrzeuges F wählt anschließend eine der angezeigten Fahrspurlinien FSL aus. Die Lenk-Steuereinheit 3B des Park-Assistenzsystems 1 lenkt anschließend das Fahrzeug F ausgehend von dem Haltepunkt HP entsprechend der ausgewählten Fahrspurlinie FSL das Fahrzeug F in die Parkendstellung innerhalb der Parkgarage G. Die Berechnungseinheit 3A des Park-Assistenzsystems 1 berechnet die Fahrspurlinien FSL bei einer möglichen Ausführungsform in Abhängigkeit von einem gemessenen Abstand zwischen dem Haltepunkt HP und der Garageneinfahrt. Weiterhin kann die Berechnungseinheit 3A die Fahrspurlinien FSL in Abhängigkeit einer gespeicherten Fahrzeuglänge FL und einer gespeicherten Fahrzeugbreite FB des Fahrzeuges F berechnen. Bei einer weiteren möglichen Ausführungsform berechnet die Berechnungseinheit 3A der Steuerung 3 zusätzlich die Fahrspurlinien FSL in Abhängigkeit einer gespeicherten oder sensorisch erfassten Garagentiefe GT und/oder in Abhängigkeit einer gespeicherten oder sensorisch erfassten Garagenbreite GB der Parkgarage G. Bei einer weiteren möglichen Ausführungsform berechnet die Berechnungseinheit 3A die Fahrspurlinien FSL in Abhängigkeit der vermessenen Garagenkontur GK der Parkgarage G. Der von dem Haltepunkt HP zurückzulegende Fahrweg in die Tiefe der Parkgarage G kann bei einer möglichen Ausführungsform aus einem gemessenen Abstand zwischen Haltepunkt HP und Garageneinfahrt und einer gespeicherten Fahrzeuglänge FL des Fahrzeuges F plus einem Überweg berechnet werden. Aus den ermittelten Werten werden verschiedene Fahrspurlinien FSL in die Parkendstellung berechnet. Die berechneten Fahrspurlinien FSL werden dem Fahrer zur Auswahl über eine Anzeige der Nutzerschnittstelle 5 des Park-Assistenzsystems 1 angezeigt.

Falls die Berechnungseinheit 3A des Park-Assistenzsystems 1 nicht in der Lage ist, mit der momentanen ermittelten Relativstellung des Fahrzeuges F an dem Haltepunkt HP eine mögliche zulässige Fahrspurlinie FSL zu einer geeigneten Parkendstellung innerhalb der Parkgarage G zu berechnen, wird dies dem Fahrer vorzugsweise über eine Anzeige der Nutzerschnittstelle 5 angezeigt. Dabei wird der Fahrer über die notwendige Änderung der Stellung des Fahrzeuges F relativ zu der Garage G informiert. Ist beispielsweise das Fahrzeug F in der Haltestellung am Haltepunkt HP zu dicht an einem Vorsprung der Garageneinfahrt der Parkgarage G, kann Raum zum Gegenlenken fehlen. Falls dabei der Winkel zur Garagenwand zu groß ist, würde das Fahrzeugheck des Fahrzeuges F auf eine Garagenwand der Garage G treffen. In diesem Falle kann das Park-Assistenzsystem 1 dem Fahrer anzeigen, dass das Fahrzeug F wieder vorgezogen werden muss. Bei einer möglichen Ausführungsform zeigt die Anzeige des Park-Assistenzsystems 1 Richtwerte für das Wiedervorziehen des Fahrzeuges F an, falls die Fahrspurlinien-Berechnung eine unbrauchbare Ausgangs- bzw. Haltestellung II angezeigt hat. Falls das Fahrzeug F mit großem seitlichen Abstand zu einem Vorsprung der Parkgarage G steht, ist es notwendig, entsprechend weit auszulenken, um der Garagenwand möglichst nahe zu kommen. Das bedingt einen entsprechenden Freiraum auf der Fahrerseite, sodass es ebenfalls notwendig ist, das Fahrzeug F wieder vorzuziehen.

Die Berechnungseinheit 3A des Park-Assistenzsystems 1 ermittelt mögliche Fahrspurlinien FSL bei einer Wand-Parallelstellung und kann diese auf einer Anzeige der Nutzerschnittstelle 5 dem Fahrer anzeigen. Bei einer möglichen Ausführungsform verwendet die Berechnungseinheit 3A zur Berechnung der großräumigen Bewegung des Fahrzeuges F Klothoidenbahnen. Bei einer möglichen Ausführungsform werden noch während der Annäherung an eine Garagenwand der Parkgarage G Bahnkorrekturen berechnet und vorgenommen, sodass ein enger Wand-Parallelabstand erreicht wird.

Vorzugsweise wird die Parkendstellung mit dem ersten Anfahren erreicht, insbesondere weil die freie Tiefe der Parkgarage G zu der Fahrzeuglänge FL oft begrenzt ist und ein Rangieren des Fahrzeuges F keine weitere Verbesserung ergibt. Die Fahrzeugfront des Fahrzeuges F wird vorzugsweise mit einem möglichst kurzen Überweg zum Vorsprung der Garageneinfahrt zum Stehen gebracht. Ausgehend von einem Minimalwert kann ein Wandabstand durch den Fahrer über die Nutzerschnittstelle 5 voreingestellt werden. Bei einer möglichen Ausführungsform werden in der Werkeinstellung des Fahrzeuges F die Fahrzeugdimensionen des Fahrzeuges F, insbesondere die Fahrzeuglänge FL und/oder die Fahrzeugbreite FB des Fahrzeuges F, in einer Datenspeichereinheit 6 des Park-Assistenzsystems 1 gespeichert. Die Fahrzeuglänge FL des Fahrzeuges F minus Vorsprung plus Haltestellung plus Überweg ergibt den automatisch zu lenkenden Fahrweg in Längsrichtung des Fahrzeuges F. Der Überweg ist dabei abhängig von einem seitlichen Abstand in Ausgangsstellung und ergibt sich aus der Berechnung der Fahrspurlinie, die ihrerseits von der möglichen Dynamik der Steuerung der Bewegung abhängt. Bei einer möglichen Ausführungsform werden die verschiedenen berechneten Fahrspurlinien FSL in der Datenspeichereinheit 6 des Park-Assistenzsystems 1 zwischengespeichert und auf einer Anzeige der Nutzerschnittstelle 5 dem Fahrer zur Auswahl angezeigt. Hat der Fahrer eine zulässige Fahrspurlinie FSL ausgewählt bzw. selektiert, wird vorzugsweise das Lenkrad des Fahrzeuges F freigegeben und die Lenk-Steuereinheit 3B des Fahrzeuges F übernimmt die Lenkung des Fahrzeuges F ausgehend von der Haltestellung II hin zu der Parkendstellung III, wie in Figur 4 dargestellt.

Bei einer möglichen Ausführungsform wird die ausgewählte Fahrspurlinie FSL, die zur automatischen Lenkung des Fahrzeuges F zu der Parkendstellung benutzt wird, in der Datenspeichereinheit 6 längerfristig gespeichert bzw. die übrigen ermittelten Fahrspurlinien FSL in der Datenspeichereinheit 6 gelöscht. Die benutzte Fahrspurlinie FSL ist vorzugsweise während der gesamten Dauer des Parkens des Fahrzeuges F innerhalb der Parkgarage G gespeichert. Bei einer möglichen Ausführungsform wird nach einem Starten bzw. Anlassen des Fahrzeuges F in der Parkgarage G die benutzte gespeicherte Fahrspurlinie FSL aus der Datenspeichereinheit 6 wieder ausgelesen und durch die Lenk-Steuereinheit 3B zum Herauslenken des Fahrzeuges F ausgehend von der Parkendstellung herangezogen. Bei dieser Ausführungsform erfolgt somit auch bei einem Ausparken des Fahrzeuges F aus der Fahrzeuggarage G bis zu der Haltestellung II eine automatische Lenkung des Fahrzeuges F ohne Eingriff des Fahrers. Sobald das Fahrzeug F die Haltestellung II bzw. den Haltepunkt HP erreicht hat, kann der Fahrer die Lenkung des Fahrzeuges F übernehmen und das Fahrzeug ausgehend von der Haltestellung II manuell lenken.

Bei einer möglichen Ausführungsform des erfindungsgemäßen Park-Assistenzsystems 1 kann der Fahrer des Fahrzeuges F zwischen einem Vorwärtseinparkvorgang und einem Rückwärtseinparkvorgang wählen. Das erfindungsgemäße Park-Assistenzsystem 1 unterstützt dabei den Fahrer, je nachdem, ob der Fahrer einen Vorwärtseinparkvorgang oder einen Rückwärtseinparkvorgang über eine Nutzerschnittstelle des Park-Assistenzsystems 1 ausgewählt hat. Bei einer möglichen Ausführungsform werden in Abhängigkeit von dem ausgewählten Einparkvorgang unterschiedliche Sensoren der Messsensorik 2 aktiviert und deren Messdaten bzw. Sensordaten ausgewertet. Bei einer möglichen Ausführungsform weist die Messsensorik 2 Messsensoren auf der Beifahrerseite des Fahrzeuges F an dem hinteren Fahrzeugende des Fahrzeuges F auf, wobei die Messsensorik 2 eher zu der Fahrtrichtung des Fahrzeuges F ausgerichtet ist. Die Messsensorik 2 unterstützt insbesondere einen Rückwärtseinparkvorgang des Fahrzeuges F in eine Parkgarage G. Bei einer möglichen Ausführungsform ist sowohl für den Rückwärtseinparkvorgang als auch für den Vorwärtseinparkvorgang ein zugehöriges Steuerungsprogramm vorgesehen, das durch die Steuerung 3 des Park-Assistenzsystems 1 ausgeführt werden kann. Zur Unterstützung des Vorwärtseinparkens ist vorzugsweise ein vorderer Sensor an der Vorder- bzw. Frontseite des Fahrzeuges F vorgesehen. Das entsprechende Steuerprogramm berücksichtigt beim Einlenken hin zu einer Garagenwand ebenfalls einen Sicherheitsabstand zur Einfahrt in die Parkgarage G, wobei die Frontpartie des Fahrzeuges F in einem engen parallelen Abstand zu der Garagenwand gesteuert wird. Die dabei erreichbare Parallelstellung des Fahrzeuges F ist abhängig von der Ausgangsstellung und von einem freien Fahrweg in die Tiefe der Parkgarage G. Beispielsweise wird die Wiederausfahrt als Fahrkurve in der Datenspeichereinheit 6 des Park-Assistenzsystems 1 gespeichert und bei einem Einlegen eines Rückwärtsganges zur Verfügung gestellt. Auch beim Herausparken bzw. Herausfahren hält das Fahrzeug F vorzugsweise an einem Zwischenstopp bzw. Haltepunkt HP an, wenn der vordere Sensor beispielsweise die Garageneinfahrt um 0,5 bis 1 m passiert hat. Vorzugsweise wird die Fahrkurve bzw. Fahrspurlinie FSL und die erreichbare Endstellung auch beim Ausparken wieder zur Freigabe durch den Fahrer angezeigt. Für eine enge Wand-Parallelstellung wird beispielsweise die Bedienungsanleitung des Fahrzeuges F ein Rückwärtseinparken in die Parkgarage G mit Unterstützung des erfindungsgemäßen Park-Assistenzsystems 1 empfehlen.

Bei einer möglichen Ausführungsform wird eine akustische oder optische Warnung bei jedem Rückwärtsfahren eingeschaltet, wobei der erfindungsgemäße Park-Lenkassistent vorzugsweise gesondert aktiviert wird, beispielsweise durch Drücken einer Taste an der Nutzerschnittstelle 5 oder durch Auswahl mithilfe eines Dreh- oder Druckknopfes. Vorzugsweise kann mit einer Taste oder einem Dreh- bzw. Druckknopf durch den Fahrer zwischen einem normalen Straßenparken und einem Garagenparkvorgang gewählt werden. Bei einer möglichen Ausführungsform erfolgt die Auswahl von einem Rückwärts- oder Vorwärtsparken automatisch auf Basis von Sensordaten, die von einem hinteren oder vorderen seitlichen Sensor geliefert werden.

Wie in Figur 4 dargestellt, lenkt der Fahrer des Fahrzeuges F zunächst manuell das Fahrzeug F von der Ausgangsstellung I in die Haltestellung II. Ein Haltepunkt HP ist bei einer möglichen Ausführungsform durch eine Markierung an einer Garagenwand der Parkgarage G gekennzeichnet, die beispielsweise dem Rückspiegel des Fahrzeuges F als Bezugspunkt gegenüberliegt, wobei auch das Ultraschallmessfeld im Blickfeld liegt und den Abstand bei einer hinteren Begrenzung anzeigt. Mit einem vorderen Ultraschallsensor kann beispielsweise ein vorderer Wandabstand angezeigt werden. Bei einer weiteren möglichen Ausführungsform kann der Haltepunkt HP durch einen Sensor des Park-Assistenzsystems 1 sensorisch erfasst werden. Die automatische Steuerung dient dazu, dass der Fahrer die Aufmerksamkeit auf ein Display bzw. eine Anzeige richten kann. Falls ein besonders kurzer Überweg zu der Garageneinfahrt erreicht werden soll, kann sich die Frontpartie des Fahrzeuges F mit der Radstellung zum Einlenken der Garagenwand nähern und in Endstellung nicht wieder eine gerade Stellung erreichen. In diesem Falle wird das Fahrzeug F angehalten, bevor der vordere Abstand zu gering wird. Hierzu wird vorzugsweise ein vorderer Sensor des Park-Assistenzsystems 1 zur Steuerung einer Bremse eines Radbremssystems vorgesehen. Bei einer möglichen Ausführungsform wird durch das Ausfahren aus der Parkgarage G ein Lenkvorgang gespeichert, der an einem Einfahrtvorsprung der Parkgarage G vorbeilenkt.

Wie in Figur 4 dargestellt, kann der Fahrer des Fahrzeuges F zum Erreichen der optimalen Haltestellung den Haltepunkt HP in einem Kreisbogen anfahren. In der Bedienungsanleitung des Fahrzeuges F kann hierzu eine Darstellung mit einem Toleranzfeld und entsprechenden Hinweisen aufgenommen werden. Eine Haltestellung, die in einem flachen Winkel zur Garagenwand nah an dem Vorsprung der Garageneinfahrt vorbeiführt, ergibt die geringsten Lenkkorrekturen. Ist ein Vorziehen des Fahrzeuges erforderlich, kann in einem Display bzw. einer Anzeige der Nutzerschnittstelle 5 des Park-Assistenzsystems 1 ein Korrekturrichtwert für den seitlichen Abstand und den Winkel grafisch angezeigt werden, wobei der neue Haltepunkt HP wieder akustisch signalisiert wird. Bei einer möglichen Ausführungsform ist eine Rückfahrkamera mit eingeblendeten Fahrhilfslinien und zusätzlichen Hilfslinien für den Winkel zur Garagenwand und für den Abstand zur Garageneinfahrt als Hilfe vorgesehen, falls ein erneutes Anfahren des Fahrzeuges F erforderlich wird.

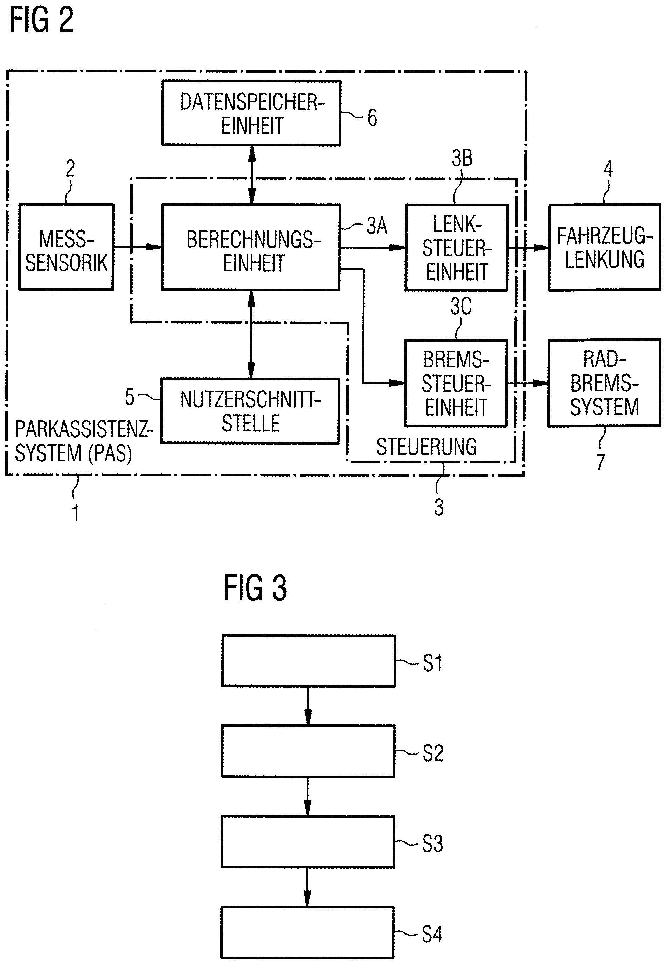

Figur 2 zeigt ein weiteres Ausführungsbeispiel eines erfindungsgemäßen Park-Assistenzsystems 1. Bei dieser Ausführungsform weist das Park-Assistenzsystem 1 zusätzlich eine Brems-Steuereinheit 3C auf, die ein Radbremssystem 7 des Fahrzeuges F ansteuert. Bei einer möglichen Ausführungsform erfasst die Messsensorik 2 des Park-Assistenzsystems 1 laufend bzw. kontinuierlich einen Abstand des Fahrzeuges F zu einer Garagenwand der Parkgarage G während des Einparkens. Die Brems-Steuereinheit 3C der Steuerung 3 innerhalb des Park-Assistenzsystems 1 aktiviert bei Unterschreiten eines Sicherheitsabstandes zwischen dem Fahrzeug F und einer Garagenwand der Parkgarage G automatisch das Radbremssystem 7 des Fahrzeuges F. Bei einer möglichen Ausführungsform berechnet die Berechnungseinheit 3A des Park-Assistenzsystems 1 basierend auf den sensorisch erfassten Abständen des Fahrzeuges F zu der Garagenwand und der momentanen Fahrzeuggeschwindigkeit des Fahrzeuges eine notwendige Bremsverzögerungszeit und/oder Bremsverzögerungskraft zur Einhaltung des Sicherheitsabstandes. Bei einer möglichen Ausführungsform ist der Sicherheitsabstand über eine Eingabeeinheit der Nutzerschnittstelle 5 durch den Fahrer des Fahrzeuges F konfigurierbar bzw. einstellbar. Die Brems-Steuereinheit 3C des Park-Assistenzsystems 1 steuert das Radbremssystem 7 des Fahrzeuges F bei einer möglichen Ausführungsform in Abhängigkeit der berechneten Bremsverzögerungszeit und/oder Bremsverzögerungskraft an. Auf diese Weise schafft das erfindungsgemäße Park-Assistenzsystem 1 einen Anfahrschutz-Mechanismus, der ein Unterschreiten von einem sicheren Wandabstand verhindert. Der von einem Sensor erfasste Wandabstand erzeugt bei einem vorgegebenen Minimalabstand über eine Auswerteelektronik der Steuerung 3 vorzugsweise ein Stoppsignal, das auf das vorhandene Radbremssystem 7 wirkt, sodass das Fahrzeug F in einem Sicherheitsabstand zum Stehen gebracht wird. Bei einer möglichen Ausführungsform weist die Messsensorik 2 hierzu Messsensoren auf, die der Fahrerseite gegenüberliegen, wobei sie vorzugsweise vorne und hinten an dem Fahrzeug F so weit zur Seite positioniert sind, dass der enge Wandabstand in einem ausreichend genauen Messbereich liegt. Diese Sensoren sind vorzugsweise Ultraschallsensoren. Bei einer möglichen Ausführungsform wird durch eine Steuerungssoftware der Auswerteelektronik die Fahrzeuggeschwindigkeit des Fahrzeuges F und einen Anfahrwinkel zur Garagenwand ermittelt und mit der Bremsverzögerungszeit daraus der Stoppbefehl vor Erreichen eines kritischen Wandabstandes errechnet. Bei einer möglichen Ausführungsform werden die Fahrzeugräder des Fahrzeuges F mittels einer ESP-Einheit abgebremst. Alternativ kann auch eine elektrisch betätigbare Handbremse durch die Brems-Steuereinheit 3C der Steuerung angesteuert werden. Bei einer möglichen Ausführungsform werden Sensoren auf der Beifahrerseite hinten und vorne und weiter zur Seite positioniert. Weiterhin können zusätzliche Sensoren quer zur Fahrtrichtung vorgesehen werden. Der an dem hinteren Fahrzeugende bzw. Fahrzeugheck angebrachte Sensor, insbesondere Ultraschallsensor, schlägt beim Rückwärtseinparken des Fahrzeuges F erst an. Bei einem darauffolgenden Einlenken des Fahrzeuges F werden die von dem vorderen Sensor, insbesondere Ultraschallsensor, gelieferten Sensordaten berücksichtigt und ausgewertet, um eine Kollision mit dem seitlichen Vorsprung der Garageneinfahrt der Parkgarage G zu verhindern und um einen Wandkontakt mit einer Garagenwand zu verhindern. Bei einem Vorwärtseinparkvorgang werden hauptsächlich die Sensordaten ausgewertet, die ein vorderer Sensor, insbesondere Ultraschallsensor, der an einer Beifahrerseite des Fahrzeuges F angebracht ist, liefert. Bei einer möglichen Ausführungsform liegt die Messtoleranz und die Auflösung der Messung in einem Bereich von etwa ±1 cm. Eine Steuerungssoftware der Steuerung 3 kann bei einer möglichen Ausführungsform aus laufenden Abstandsmessungen einen Anfahrwinkel ermitteln und mit der Anfahrgeschwindigkeit und der ermittelten Bremsverzögerung einen Bremseingriff mithilfe des Radbremssystems 7 vornehmen. Eine Betriebsanleitung des Fahrzeuges F kann für Anfahrwinkel und Geschwindigkeiten Grenzen angeben, bis zu denen die Brems-Assistenzfunktion gewährleistet werden kann. Werden diese Grenzen überschritten, kann bei einer möglichen Ausführungsform ein vorzeitiges Abbremsen des Fahrzeuges F ausgelöst werden. Bei einer weiteren möglichen Ausführungsform wird die Toleranz der Bremswirkung, beispielsweise infolge von Wasser auf Bremsscheiben, zum Bremsen der Radbremsanlage 7 in Abhängigkeit von der Fahrgeschwindigkeit und einem Anfahrwinkel mitberücksichtigt.

Figur 3 zeigt ein Ablaufdiagramm zur Darstellung eines Ausführungsbeispiels eines erfindungsgemäßen Verfahrens zum Einparken eines Fahrzeuges F in eine Parkgarage G.

In einem ersten Schritt S1 wird eine Garagenkontur GK der Parkgarage G bis zum Erreichen eines in einem Einfahrtsbereich der Parkgarage G befindlichen Haltepunktes HP gemessen.

In einem weiteren Schritt S2 wird eine Stellung des Fahrzeuges F an dem Haltepunkt HP relativ zu der Parkgarage G aus der gemessenen Garagenkontur ermittelt.

In einem weiteren Schritt S3 wird mindestens eine Fahrspurlinie bzw. Fahrkurve FSL von dem Haltepunkt HP zu einer Parkendstellung innerhalb der Parkgarage G auf Basis der ermittelten Stellung des Fahrzeuges F berechnet.

In einem weiteren Schritt S4 wird anschließend das Fahrzeug F automatisch ausgehend von dem Haltepunkt HP bis zu der Parkendstellung innerhalb der Parkgarage G entsprechend der berechneten Fahrspurlinie FSL automatisch gelenkt.

Bei einer möglichen Ausführungsform werden in einem Schritt S3 weitere mögliche Fahrspurlinien, insbesondere Klothoidenbahnen, berechnet und zur Auswahl durch den Fahrer des Fahrzeuges F angezeigt. Der Fahrer wählt eine der möglichen angezeigten Fahrspurlinien FSL aus, die anschließend mit dem automatischen Lenkmanöver des Fahrzeuges F im Schritt S4 ausgeführt wird.

Bei einer möglichen Ausführungsform wird die benutzte Fahrspurlinie bzw. Fahrkurve FSL in einer Datenspeichereinheit 6 gespeichert. Das Fahrzeug F wird dann ausgehend von der Parkendstellung innerhalb der Parkgarage G entsprechend der aus der Datenspeichereinheit 6 ausgelesenen Fahrspurlinie FSL automatisch aus der Fahrzeuggarage G herausgelenkt. Bei einer möglichen Ausführungsform des erfindungsgemäßen Verfahrens, wie es in Figur 3 dargestellt ist, wird während des Lenkens des Fahrzeuges F auch ein Abstand des Fahrzeuges F zu einer Garagenwand der Parkgarage G sensorisch erfasst. Bei Unterschreiten eines Sicherheitsabstandes zwischen dem Fahrzeug F und einer Garagenwand wird das Fahrzeug F vorzugsweise automatisch abgebremst.

Bei einer möglichen Ausführungsform sind unterschiedliche Steuerprogramme für einen Rückwärtseinparkvorgang in eine Parkgarage G und in einen Vorwärtseinparkvorgang in eine Parkgarage G in einem Programmspeicher des Park-Assistenzsystems 1 gespeichert und können durch den Fahrer aktiviert werden. Bei einer möglichen Ausführungsform wird das geeignete Einpark-Steuerprogramm automatisch in Abhängigkeit von dem manuell durchgeführten Lenkmanöver zwischen der Ausgangsstellung I und der Haltestellung II aktiviert. Je nachdem, welches Steuerprogramm aktiviert worden ist, werden unterschiedliche Sensoren der Messsensorik 2 aktiviert bzw. ihre Sensordaten durch die Berechnungseinheit 3A ausgewertet. Bei dem Fahrzeug F, wie es in Figur 4 dargestellt ist, handelt es sich vorzugsweise um ein Straßenfahrzeug, beispielsweise einen Pkw oder Lkw. Bei einer alternativen Ausführungsform kann es sich bei dem Fahrzeug auch um ein Wasserfahrzeug, beispielsweise eine Segelyacht oder dergleichen, handeln, die in ein Schiffshaus gesteuert wird.

Bei einer möglichen Ausführungsform wird nach Erreichen der Parkendstellung sensorisch ein seitlich vorhandener Raum zum Öffnen von Türen des Fahrzeuges F ermittelt und daraus ein maximaler Öffnungswinkel für die Türen des Fahrzeuges F berechnet. Bei einer möglichen Ausführungsform werden die Türen beim Öffnen in dieser maximalen berechneten Öffnungsstellung arretiert, um eine Berührung der Garagenwand der Garage G zu vermeiden. Bei einer weiteren möglichen Ausführungsform des erfindungsgemäßen Park-Assistenzsystems 1 wird eine geeignete Parkendstellung in Abhängigkeit von der Belegung des Fahrzeuges F durch Personen ermittelt. Wird beispielsweise das Fahrzeug F nur von einem Fahrer des Fahrzeuges F gelenkt und sind keine weiteren Personen in dem Fahrzeugraum des Fahrzeuges vorhanden, wird die Parkendstellung derart ermittelt, dass möglichst viel Platz auf der Fahrerseite zum Aussteigen des Fahrers aus dem Fahrzeugraum vorhanden ist. Ist umgekehrt in dem Fahrzeug F zusätzlich ein Beifahrer vorhanden, wird das Fahrzeug in einer möglichst zentrierten Parkendstellung geparkt, sodass beide Personen möglichst ungehindert das geparkte Fahrzeug F verlassen können. Bei einer möglichen Ausführungsform wird die Belegung bzw. die Anwesenheit von Personen innerhalb des Fahrzeugraumes durch das Park-Assistenzsystem 1 sensorisch erfasst. Diese Sensoren umfassen beispielsweise an den Sitzen des Fahrzeugraumes vorgesehene Drucksensoren oder eine in den Innenraum gerichtete Fahrzeugkamera.

### BEZUGSZEICHEN

- 1: Park-Assistenzsystem
- 2: Messsensorik
- 3: Steuerung
- 3A: Berechnungseinheit
- 3B: Lenk-Steuereinheit
- 3C: Brems-Steuereinheit
- 4: Fahrzeuglenkung
- 5: Nutzerschnittstelle
- 6: Datenspeichereinheit
- 7: Radbremssystem
- F: Fahrzeug
- G: Parkgarage
- HP: Haltepunkt
- GT: Garagentiefe
- GB: Garagenbreite
- FL: Fahrzeuglänge
- FB: Fahrzeugbreite
- FSL: Fahrspurlinie bzw. Fahrkurve
- I: Ausgangsstellung
- II: Haltestellung
- III: Parkendstellung

## Patentansprüche

1. Park-Assistenzsystem (1) zum Einparken eines Fahrzeuges (F) in eine Parkgarage (G) mit
einer an mindestens einem Fahrzeugende des Fahrzeuges (F) angeordneten Messsensorik (2) zur Messung einer Garagenkontur (GK) der Parkgarage (G) und mit
einer Lenk-Steuereinheit (3B), die das Fahrzeug (F) ausgehend von einem Haltepunkt (HP) in eine Parkendstellung innerhalb der Parkgarage (G) automatisch lenkt, **dadurch gekennzeichnet dass**, eine Berechnungseinheit (3A) des Park-Assistenzsystems (1) aus der vermessenen Garagenkontur (GK) der Parkgarage (G) eine Stellung des Fahrzeuges (F) an dem Haltepunkt (HP), insbesondere eine Winkelstellung, relativ zu der Parkgarage (G) ermittelt,
wobei die Berechnungseinheit (3A) des Park-Assistenzsystems (1) in Abhängigkeit einer sensorisch erfassten Garagentiefe (GT) der Parkgarage (G) und einer sensorisch erfassten Garagenbreite (GB) der Parkgarage (G) auf Basis der ermittelten Stellung des Fahrzeuges (F) an dem Haltepunkt (HP) Fahrspurlinien (FSL) ausgehend von dem Haltepunkt (HP) hin zu einer geeigneten Parkendstellung innerhalb der Parkgarage (G) berechnet, in welcher die Fahrzeugkarosserie des Fahrzeuges (F) parallel zu mindestens einer Garagenwand der Parkgarage (G) ausgerichtet ist.

2. Park-Assistenzsystem nach Anspruch 1,
wobei die Messsensorik (2) des Park-Assistenzsystems (1) die Garagenkontur (GK) bis zum Erreichen des in einem Einfahrtsbereich der Parkgarage (G) befindlichen Haltepunktes (HP) vermisst.

3. Park-Assistenzsystem nach einem der vorangehenden Ansprüche 1 oder 2, wobei die Lenk-Steuereinheit (3B) des Park-Assistenzsystems (1) das Fahrzeug (F) ausgehend von dem Haltepunkt (HP) entsprechend einer berechneten Fahrspurlinie in die Parkendstellung innerhalb der Parkgarage (G) automatisch lenkt.

4. Park-Assistenzsystem nach einem der Ansprüche 1 bis 3, wobei die durch die Berechnungseinheit (3A) des Park-Assistenzsystems (1) berechneten Fahrspurlinien (FSL) dem Fahrer des Fahrzeuges (F) auf einer Anzeige einer Nutzerschnittstelle (5) des Park-Assistenzsystems (1) angezeigt werden und durch den Fahrer auswählbar sind, wobei die Lenk-Steuereinheit (3B) des Park-Assistenzsystems (1) das Fahrzeug (F) ausgehend von dem Haltepunkt (HP) entsprechend der ausgewählten Fahrspurlinie in die Parkendstellung innerhalb der Parkgarage (G) automatisch lenkt.

5. Park-Assistenzsystem nach einem der vorangehenden Ansprüche 1 bis 4,
wobei die Berechnungseinheit (3A) des Park-Assistenzsystems (1) Fahrspurlinien (FSL) in Abhängigkeit von einem gemessenen Abstand zwischen dem Haltepunkt (HP) und einer Garageneinfahrt der Parkgarage (G) und/oder in Abhängigkeit einer gespeicherten Fahrzeuglänge (FL) des Fahrzeuges (F) und/oder einer gespeicherten Fahrzeugbreite (FB) des Fahrzeuges (F) und/oder in Abhängigkeit der vermessenen Garagenkontur (GK) der Parkgarage (G) berechnet.

6. Park-Assistenzsystem nach einem der vorangehenden Ansprüche 1 bis 5,
wobei der in dem Einfahrtsbereich der Parkgarage (G) gelegene Haltepunkt (HP) markiert und/oder durch einen Sensor des Park-Assistenzsystems (1) sensorisch erfassbar ist und/oder wobei das Erreichen des Haltepunktes (HP) dem Fahrer des Fahrzeuges (F) über eine Nutzerschnittstelle (5) des Park-Assistenzsystems (1) akustisch und/oder optisch angezeigt wird.

7. Park-Assistenzsystem nach einem der vorangehenden Ansprüche 1 bis 6,
wobei die durch die Lenk-Steuereinheit (3B) zum Lenken des Fahrzeuges (F) in die Parkendstellung genutzte Fahrspurlinie (FSL) in einer Datenspeichereinheit (6) des Park-Assistenzsystems (1) gespeichert wird und zum Lenken des Fahrzeuges (F) ausgehend von der Parkendstellung aus der Parkgarage (G) heraus durch die Lenk-Steuereinheit (3B) aus der Datenspeichereinheit (6) ausgelesen wird.

8. Park-Assistenzsystem nach einem der vorangehenden Ansprüche 1 bis 7,
wobei, falls die Berechnungseinheit (3A) des Park-Assistenzsystems (1) ausgehend von der ermittelten Stellung des Fahrzeuges (F) an dem Haltepunkt (HP) keine möglichen Fahrspurlinien zu einer geeigneten Parkendstellung innerhalb der Parkgarage (G) berechnen kann, dem Fahrer des Fahrzeuges (F) eine notwendige Änderung der Stellung des Fahrzeuges (F) angezeigt wird.

9. Park-Assistenzsystem nach einem der vorangehenden Ansprüche 1 bis 8,
wobei die Messsensorik (2) des Park-Assistenzsystems (1) eine Ultraschallsensorik und/oder eine Lasersensorik aufweist.

10. Park-Assistenzsystem nach einem der vorangehenden Ansprüche 1 bis 9,
wobei die Messsensorik (2) auf der Beifahrerseite an dem hinteren Fahrzeugende des Fahrzeuges (F) angeordnet und quer zu der Fahrtrichtung des Fahrzeuges ausgerichtet ist.

11. Park-Assistenzsystem nach einem der vorangehenden Ansprüche 1 bis 10,
wobei die Messsensorik (2) des Park-Assistenzsystems (1) laufend einen Abstand des Fahrzeuges (F) zu einer Garagenwand der Parkgarage (G) während des Einparkens erfasst.

12. Park-Assistenzsystem nach Anspruch 11,
wobei eine Brems-Steuereinheit (3C) des Park-Assistenzsystems (1) bei Unterschreiten eines vorgegebenen Sicherheitsabstandes zwischen dem Fahrzeug (F) und einer Garagenwand der Parkgarage (G) automatisch ein Radbremssystem (7) des Fahrzeuges (F) aktiviert.

13. Park-Assistenzsystem nach Anspruch 11 oder 12,
wobei die Berechnungseinheit (3A) des Park-Assistenzsystems (1) basierend auf dem sensorisch erfassten Abstand des Fahrzeuges (F) zu einer Garagenwand der Parkgarage (G) und einer Fahrzeuggeschwindigkeit des Fahrzeuges (F) eine notwendige Bremsverzögerungszeit und/oder Bremsverzögerungskraft zur Einhaltung des Sicherheitsabstandes berechnet.

14. Park-Assistenzsystem nach Anspruch 13,
wobei die Brems-Steuereinheit (3C) des Park-Assistenzsystems (1) das Radbremssystem (7) des Fahrzeuges (F) in Abhängigkeit der berechneten Bremsverzögerungszeit und/oder in Abhängigkeit von der berechneten Bremsverzögerungskraft ansteuert.

15. Verfahren zum Einparken eines Fahrzeuges (F) in eine Parkgarage (G) mit den folgenden Schritten:
(a) Messen (S1) einer Garagenkontur der Parkgarage (G) bis zum Erreichen eines in einem Einfahrtsbereich der Parkgarage befindlichen Haltepunktes (HP);
(b) Ermitteln (S2) einer Stellung des Fahrzeuges (F) an dem Haltepunkt (HP) relativ zu der Parkgarage (G) auf Basis der gemessenen Garagenkontur;
(c) Berechnen (S3) von mindestens einer Fahrspurlinie von dem Haltepunkt (HP) zu einer Parkendstellung innerhalb der Parkgarage (G) auf Basis der ermittelten Stellung des Fahrzeuges und in Abhängigkeit einer sensorisch erfassten Garagentiefe (GT) der Parkgarage (G) und einer sensorisch erfassten Garagenbreite (GB) der Parkgarage (G); und
(d) automatisches Lenken (S4) des Fahrzeuges (F) ausgehend von dem Haltepunkt (HP) bis zu der Parkendstellung innerhalb der Parkgarage (G) entsprechend der berechneten Fahrspurlinie.

16. Verfahren nach Anspruch 15,
wobei die Fahrspurlinie in einer Datenspeichereinheit (6) gespeichert wird und das Fahrzeug (F) ausgehend von der Parkendstellung aus der Parkgarage (G) entsprechend der aus der Datenspeichereinheit ausgelesenen Fahrspurlinie automatisch wieder herausgelenkt wird.

17. Verfahren nach Anspruch 15 oder 16,
wobei während des Lenkens des Fahrzeuges (F) laufend ein Abstand des Fahrzeuges (F) zu einer Garagenwand der Parkgarage (G) sensorisch erfasst wird und bei Unterschreiten eines Sicherheitsabstandes zwischen dem Fahrzeug (F) und der Garagenwand das Fahrzeug (F) automatisch abgebremst wird.

18. Verfahren nach einem der vorangehenden Ansprüche 15 bis 17,
wobei die Fahrspurlinie in Abhängigkeit von einem gemessenen Abstand zwischen dem Haltepunkt (HP) und einer Garageneinfahrt der Parkgarage (G) und/oder in Abhängigkeit einer gespeicherten Fahrzeuglänge (FL) des Fahrzeuges (F) und/oder einer gespeicherten Fahrzeugbreite (FB) des Fahrzeuges (F) und/oder in Abhängigkeit der vermessenen Garagenkontur der Parkgarage (G) berechnet wird.

## Claims

1. A parking assistance system (1) for parking a vehicle (F) into a parking garage (G) having a measuring sensor system (2) arranged on at least one vehicle end of the vehicle (F) for measuring a garage contour (GK) of the parking garage (G), and having a steering control unit (3B) automatically steering the vehicle (F) into a final parking position within the parking garage (G) starting from a stop position (HP),
**characterized in that**
a calculating unit (3A) of the parking assistance system (1) determines, from the measured garage contour (GK) of the parking garage (G), a position of the vehicle (F) at the stop position (HP), in particular an angular position, relative to the parking garage (G),
wherein the calculating unit (3A) of the parking assistance system (1) calculates driving lines (FSL) starting from the stop position (HP) toward a suitable final parking position within the parking garage (G), in which final parking position the vehicle body of the vehicle (F) is oriented in parallel with at least one garage wall of the parking garage (G), said calculation being performed depending on a garage depth (GT) of the parking garage (G) captured by the sensors and a garage width (GB) of the parking garage (G) captured by the sensors and on the basis of the determined position of the vehicle (F) at the stop position (HP).

2. The parking assistance system according to claim 1,
wherein the measuring sensor system (2) of the parking assistance system (1) measures the garage contour (GK) until the stop position (HP) located in an entrance region of the parking garage (G) is reached.

3. The parking assistance system according to any one of the preceding claims 1 or 2, wherein the steering control unit (3B) of the parking assistance system (1) automatically steers the vehicle (F) into the final parking position within the parking garage (G) starting from the stop position (HP) and corresponding to a calculated driving line.

4. The parking assistance system according to any one of claims 1 to 3, wherein the driving lines (FSL) calculated by the calculating unit (3A) of the parking assistance system (1) are displayed to the driver of the vehicle (F) on a display of a user interface (5) of the parking assistance system (1) and are selectable by the driver, wherein the steering control unit (3B) of the parking assistance system (1) automatically steers the vehicle (F) into the final parking position within the parking garage (G) starting from the stop position (HP) and corresponding to the selected driving line.

5. The parking assistance system according to any one of the preceding claims 1 to 4, wherein the calculating unit (3A) of the parking assistance system (1) calculates driving lines (FSL) depending on a measured distance between the stop position (HP) and a garage entrance of the parking garage (G) and/or depending on a stored vehicle length (FL) of the vehicle (F) and/or a stored vehicle width (FB) of the vehicle (F) and/or depending on the measured garage contour (GK) of the parking garage (G).

6. The parking assistance system according to any one of the preceding claims 1 to 5, wherein the stop position (HP) located in the entrance region of the parking garage (G) is marked and/or is capturable by a sensor of the parking assistance system (1), and/or wherein the driver of the vehicle (F) is acoustically and/or visually informed, via a user interface (5) of the parking assistance system (1), of the fact that the stop position (HP) is reached.

7. The parking assistance system according to any one of the preceding claims 1 to 6, wherein the driving line (FSL) used by the steering control unit (3B) for steering the vehicle (F) into the final parking position is stored in a data storage unit (6) of the parking assistance system (1) and is read out from the data storage unit (6) by the steering control unit (3B) for the purpose of steering the vehicle (F) out of the parking garage (G) starting from the final parking position.

8. The parking assistance system according to any one of the preceding claims 1 to 7, wherein, if the calculating unit (3A) of the parking assistance system (1) is unable to calculate, starting from the determined position of the vehicle (F) at the stop position (HP), any possible driving lines toward a suitable final parking position within the parking garage (G), a necessary change in the position of the vehicle (F) is indicated to the driver of the vehicle (F).

9. The parking assistance system according to any one of the preceding claims 1 to 8, wherein the measuring sensor system (2) of the parking assistance system (1) has an ultrasonic sensor system and/or a laser sensor system.

10. The parking assistance system according to any one of the preceding claims 1 to 9, wherein the measuring sensor system (2) is arranged on the front-seat passenger side on the rear vehicle end of the vehicle (F) and oriented across the direction of motion of the vehicle.

11. The parking assistance system according to any one of the preceding claims 1 to 10, wherein the measuring sensor system (2) of the parking assistance system (1) continuously measures a distance between the vehicle (F) and a garage wall of the parking garage (G) during a parking-in maneuver.

12. The parking assistance system according to claim 11,
wherein a braking control unit (3C) of the parking assistance system (1) automatically activates a wheel brake system (7) of the vehicle (F) if a distance between the vehicle (F) and a garage wall of the parking garage (G) is smaller than a predetermined safe distance.

13. The parking assistance system according to claim 11 or 12,
wherein the calculating unit (3A) of the parking assistance system (1) calculates, on the basis of the distance between the vehicle (F) and a garage wall of the parking garage (G) captured by the sensors and a vehicle velocity of the vehicle (F), a necessary braking deceleration time and/or braking deceleration force for maintaining the safe distance.

14. The parking assistance system according to claim 13,
wherein the braking control unit (3C) of the parking assistance system (1) drives the wheel brake system (7) of the vehicle (F) depending on the calculated braking deceleration time and/or depending on the calculated braking deceleration force.

15. A method for parking a vehicle (F) into a parking garage (G) having the following steps:
(a) measuring (S1) a garage contour of the parking garage (G) until a stop position (HP) located in an entrance region of the parking garage is reached;
(b) determining (S2) a position of the vehicle (F) at the stop position (HP) relative to the parking garage (G) on the basis of the measured garage contour;
(c) calculating (S3) at least one driving line from the stop position (HP) toward a final parking position within the parking garage (G) on the basis of the determined position of the vehicle and depending on a garage depth (GT) of the parking garage (G) captured by the sensors and a garage width (GB) of the parking garage (G) captured by the sensors; and
(d) automatically steering (S4) the vehicle (F) starting from the stop position (HP) to the final parking position within the parking garage (G) corresponding to the calculated driving line.

16. The method according to claim 15,
wherein the driving line is stored in a data storage unit (6) and the vehicle (F) is automatically re-steered out of the parking garage (G) starting from the final parking position and corresponding to the driving line read out from the data storage unit.

17. The method according to claim 15 or 16,
wherein a distance between the vehicle (F) and a garage wall of the parking garage (G) is continuously captured by the sensors while steering the vehicle (F) and the vehicle (F) is automatically slowed down if a distance between the vehicle (F) and the garage wall is smaller than a safe distance.

18. The method according to any one of the preceding claims 15 to 17,
wherein the driving line is calculated depending on a measured distance between the stop position (HP) and a garage entrance of the parking garage (G) and/or depending on a stored vehicle length (FL) of the vehicle (F) and/or a stored vehicle width (FB) of the vehicle (F) and/or depending on the measured garage contour of the parking garage (G).

## Revendications

1. Système d'assistance au stationnement (1) pour la mise en stationnement d'un véhicule (F) dans un box de stationnement (G) avec un système de capteurs (2) disposé sur au moins une extrémité de véhicule du véhicule (F) pour la mesure d'un contour de box (GK) du box de stationnement (G) et avec une unité de commande de direction (3B), laquelle dirige automatiquement le véhicule (F) à partir d'un point d'arrêt (HP) vers une position finale de stationnement dans le box de stationnement (G),
**caractérisé en ce qu'**
une unité de calcul (3A) du système d'assistance au stationnement (1) détermine une position du véhicule (F) au point d'arrêt (HP), en particulier une position angulaire, relativement au box de stationnement (G), à partir du contour de box mesuré (GK) du box de stationnement (G), l'unité de calcul (3A) du système d'assistance au stationnement (1) calculant, en fonction d'une profondeur de box de détectée par capteur (GT) du box de stationnement (G) et d'une largeur de box détectée par capteur (GB) du box de stationnement (G) sur la base de la position déterminée du véhicule (F) au point d'arrêt (HP), des lignes de voies (FSL) à partir du point d'arrêt (HP) jusqu'à une position finale de stationnement appropriée dans le box de stationnement (G), dans laquelle la carrosserie du véhicule (F) est orientée parallèlement à au moins une paroi du box de stationnement (G).

2. Système d'assistance au stationnement selon la revendication 1,
le système de capteur (2) du système d'assistance au stationnement (1) mesurant le contour de box (GK) jusqu'à atteindre le point d'arrêt (HP) se trouvant dans une zone d'entrée du box de stationnement (G).

3. Système d'assistance au stationnement selon l'une des revendications précédentes 1 ou 2, l'unité de commande de direction (3B) du système d'assistance au stationnement (1) dirigeant automatiquement le véhicule (F) à partir du point d'arrêt (HP) jusqu'à la position finale de stationnement dans le box de stationnement (G) conformément à une ligne de voie calculée.

4. Système d'assistance au stationnement selon l'une des revendications 1 à 3, les lignes de voies (FSL) calculées par l'unité de calcul (3A) du système d'assistance au stationnement (1) étant affichées, pour visualisation par le conducteur du véhicule (F), sur un écran d'une interface utilisateur (5) du système d'assistance au stationnement (1), et pouvant être sélectionnées par le conducteur, l'unité de commande de direction (3B) du système d'assistance au stationnement (1) dirigeant automatiquement le véhicule (F) jusqu'à la position finale de stationnement dans le box de stationnement (G), à partir du point d'arrêt (HP), conformément à la ligne de voie sélectionnée.

5. Système d'assistance au stationnement selon l'une des revendications précédentes 1 à 4,
l'unité de calcul (3A) du système d'assistance au stationnement (1) calculant des lignes de voies (FSL) en fonction d'une distance mesurée entre le point d'arrêt (HP) et une entrée de box du box de stationnement (G) et/ou en fonction d'une longueur de véhicule enregistrée (FL) du véhicule (F) et/ou d'une largeur de véhicule (FB) enregistrée du véhicule (F) et/ou en fonction du contour de box mesuré (GK) du box de stationnement (G).

6. Système d'assistance au stationnement selon l'une des revendications précédentes 1 à 5,
le point d'arrêt (HP) situé dans la zone d'entrée du box de stationnement (G) étant marqué et/ou pouvant être saisi par capteur par un capteur du système d'assistance au stationnement (1), et/ou l'atteinte du point d'arrêt (HP) étant signalée de façon sonore et/ou visuelle au conducteur du véhicule (F) par une interface utilisateur (5) du système d'assistance au stationnement (1).

7. Système d'assistance au stationnement selon l'une des revendications précédentes 1 à 6,
la ligne de voie utilisée par l'unité de commande de direction (3B) pour la direction du véhicule (F) jusqu'à la position finale de stationnement étant enregistrée dans une unité de stockage de données (6) du système d'assistance au stationnement (1) et étant lue dans l'unité de stockage de données (6) par l'unité de commande de direction (3B) pour la direction du véhicule (F) hors du box de stationnement (G) à partir de la position finale de stationnement.

8. Système d'assistance au stationnement selon l'une des revendications précédentes 1 à 7,
une modification nécessaire de la position du véhicule (F) étant indiquée au conducteur du véhicule (F) si, à partir de la position déterminée du véhicule (F) au point d'arrêt (HP), l'unité de calcul (3A) du système d'assistance au stationnement (1) ne peut calculer aucune ligne de voie possible jusqu'à une position finale de stationnement appropriée dans le box de stationnement (G),.

9. Système d'assistance au stationnement selon l'une des revendications précédentes 1 à 8,
le système de capteur (2) du système d'assistance au stationnement (1) présentant un système de capteur à ultrasons et/ou un système de capteur laser.

10. Système d'assistance au stationnement selon l'une des revendications précédentes 1 à 9,
le système de capteur (2) étant disposé du côté passager sur l'extrémité de véhicule arrière du véhicule (F) et étant orienté transversalement par rapport au sens de déplacement du véhicule.

11. Système d'assistance au stationnement selon l'une des revendications précédentes 1 à 10,
le système de capteur (2) du système d'assistance au stationnement (1) détectant en continu une distance entre le véhicule (F) et une paroi de box du box de stationnement (G) pendant la mise en stationnement.

12. Système d'assistance au stationnement selon la revendication 11,
une unité de commande de frein (3C) du système d'assistance au stationnement (1) activant automatiquement un système de freinage de roue (7) du véhicule (F) lors du dépassement d'une distance de sécurité spécifiée entre le véhicule (F) et une paroi de box du box de stationnement (G).

13. Système d'assistance au stationnement selon la revendication 11 ou 12,
l'unité de calcul (3A) du système d'assistance au stationnement (1) calculant un retard de freinage et/ou un effort retardateur de freinage nécessaires pour le maintien de la distance de sécurité (F), sur la base de la distance entre le véhicule (F) et une paroi de box du box de stationnement (G) détectée par capteur et d'une vitesse de véhicule du véhicule (F).

14. Système d'assistance au stationnement selon la revendication 13,
l'unité de commande de frein (3C) du système d'assistance au stationnement (1) activant le système de freinage de roue (7) du véhicule (F) en fonction du retard de freinage calculé et/ou en fonction de l'effort retardateur de freinage calculé.

15. Procédé pour la mise en stationnement d'un véhicule (F) dans un box de stationnement (G) avec les étapes suivantes :
(a) mesurer (S1) un contour de box du box de stationnement (G) jusqu'à l'atteinte d'un point d'arrêt (HP) se trouvant dans une zone d'entrée du box de stationnement;
(b) déterminer (S2) une position du véhicule (F) au point d'arrêt (HP) relativement au box de stationnement (G) sur la base du contour de box mesuré :
(c) calculer (S3) au moins une ligne de voie à partir du point d'arrêt (HP) jusqu'à une position finale de stationnement dans le box de stationnement (G) sur la base de la position déterminée du véhicule et en fonction d'une profondeur de box détectée par capteur (GT) du box de stationnement (G) et d'une largeur de box détectée par capteur (GB) du box de stationnement (G) ; et
(d) diriger automatiquement (S4) le véhicule (F) à partir du point d'arrêt (HP) jusqu'à une position finale de stationnement dans le box de stationnement (G) conformément à la ligne de voie calculée.

16. Procédé selon la revendication 15,
la ligne de voie étant stockée dans une unité de stockage de données (6) et le véhicule (F) étant redirigé automatiquement hors du box de stationnement (G) conformément à la ligne de voie lue dans l'unité de stockage de données, à partir de la position finale de stationnement.

17. Procédé selon la revendication 15 ou 16,
une distance entre le véhicule (F) et une paroi de box du box de stationnement (G) étant détectée en continu par capteur et le véhicule (F) étant freiné automatiquement lors du dépassement d'une distance de sécurité entre le véhicule (F) et la paroi du box, pendant la direction du véhicule (F).

18. Procédé selon l'une des revendications 15 à 17,
la ligne de voie étant calculée en fonction d'une distance mesurée entre le point d'arrêt (HP) et une entrée de box du box de stationnement (G) et/ou en fonction d'une longueur de véhicule enregistrée (FL) du véhicule (F) et/ou d'une largeur de véhicule (FB) enregistrée du véhicule (F) et/ou en fonction du contour de box mesuré (GK) du box de stationnement (G).
